# EUROPÄISCHE PATENTSCHRIFT

(11) **EP 0 920 605 B1**
(45) Veröffentlichungstag und Bekanntmachung des Hinweises auf die Patenterteilung: **13.11.2002**
(21) Anmeldenummer: 97941928.0
(22) Anmeldetag: 09.08.1997
(51) Int. Cl.: G01D 5/14

(54) **MAGNETISCHER POSITIONSSENSOR**
MAGNETIC POSITION SENSOR
DETECTEUR DE POSITION MAGNETIQUE

(30) Priorität: 23.08.1996 DE 19634074; 23.07.1997 DE 19731555
(43) Veröffentlichungstag der Anmeldung: 09.06.1999
(73) Patentinhaber: Siemens Aktiengesellschaft, 80333 München (DE)
(72) Erfinder: WIESE, Peter, D-61462 Königstein (DE)
(86) Internationale Anmeldenummer: EP9704347
(87) Internationale Veröffentlichungsnummer: WO98008061

(56) Entgegenhaltungen:
- EP-A- 0 611 951
- WO-A-92/10722
- DE-A- 4 307 544
- FR-A- 2 388 248

## Beschreibung

Die Erfindung betrifft einen magnetischen Positionssensor, bei welchem in einem Magnetfeld mindestens zwei Statorelemente angeordnet sind, wobei sich im Luftspalt zwischen den Statorelementen eine Magnetfeld-Sonde befindet, wobei ein der Bewegung eines Objektes folgendes Mittel parallel zu der von den Statorelementen aufgespannten Ebene angeordnet ist.

Aus der WO 92/10722 ist ein Hall-Winkelsensor bekannt, der in der Lage ist, winkelproportionale Signale abzugeben. Die Erfassung des Winkels erfolgt über eine Hall-Sonde, die sich in einem Luftspalt befindet, der zwischen zwei halbzylinder- oder schalenförmigen Statorhälften gebildet wird.

Ein Rotor besteht aus zwei in wechselnder Richtung magnetisierten Scheibenmagneten, die über einer Rückschlußscheibe montiert sind. Der Rotor befindet sich in axialer Richtung vor den beiden Statorhälften. Dabei steht die Magnetisierungsrichtung der Magneten senkrecht zur Drehachse.

Der magnetische Fluß, welcher aus dem Nordpol des Scheibenmagneten austritt, verteilt sich je nach Winkelsteliung der Statorhälften zu den Magnethälften, bevor er in den Südpol des Magneten eintritt.

Steht die Nord/Süd-Achse des Magneten parallel zum Luftspalt, so wird jeweils ca. die Hälfte des magnetischen Flusses durch die beiden Statorhälften fließen. In diesem Fall tritt praktisch kein Fluß durch den Luftspalt. Die Meßinduktion wird zu Null.

Steht die Nord/Süd-Achse des Magneten senkrecht zum Luftspalt, so tritt praktisch der gesamte magnetische Fluß erst in die eine Statorhälfte ein, kreuzt den Luftspalt, tritt in die zweite Statorhälfte ein und von dort in den Südpol des Magneten. Folglich wird durch die Hall-Sonde ein Maximum der Meßinduktion registriert.

Da der Magnetfluß auf seinem Weg außer dem Meß-Luftspalt noch zweimal den Luftspalt zwischen Magnet und Statorhälften in axialer Richtung durchqueren muß, erzeugen Schwankungen dieses Luftspalts, z. B. in Form eines mechanischen Axialspiels, eine starke Veränderung des Meßwertes.

Aus den weiteren Druckschriften EP-A-0 611 951, DE-A-43 07 544 und FR-A-2 388 248 sind assymetrische Rotorstrukturen bekannt.

Der Erfindung liegt somit die Aufgabe zugrunde einen magnetischen Positionssensor anzugeben, der unempfindlich gegen Verschiebungen der beweglichen Mittel in einer anderen als der Meß-Richtung ist.

Erfindungsgemäß ist die Aufgabe dadurch gelöst, daß das mit dem beweglichen Objekt, verbundene Mittel zweiteilig ausgebildet ist, wobei jedes weichmagnetische Teil mindestens ein Segment und eines der beiden Elemente eine Segmentlücke aufweist und die weichmagnetischen Elemente starr gegeneinander verschoben miteinander verbunden sind, so daß die Segmentlücke des einen Elementes dem Segment des anderen Elementes gegenübersteht, wobei die Statorelemente zwischen den weichmagnetischen Elementen angeordnet sind und ein das Magnetfeld senkrecht zu der von den Statorelementen aufgespannten Ebene erzeugender Magnet zwischen den weichmagnetischen Elementen angeordnet ist.

Durch diese unsymmetrische Struktur des mit dem beweglichen Objekt verbundenen Mittels wird ein magnetischer Ausgleichsfluß über den Meßluftspalt erzeugt.

In einer Ausgestaltung ist das mit dem beweglichen Objekt verbundene Mittel ein Rotor, der in axialer Richtung zu den Statorelementen angeordnet ist.

Der Rotor ist zweiteilig ausgebildet, wobei jedes weichmagnetische Rotorelement mindestens ein Kreissegment aufweist und die Rotorelemente starr gegeneinander verdreht miteinander verbunden sind, so daß das Kreissegment des ersten Rotorelementes einer Segmentlücke des zweiten Rotorelementes gegenübersteht, wobei die Rotorelemente zwischen den Statorelementen angeordnet sind und ein das Magnetfeld in axialer Richtung erzeugender Magnet sowohl zwischen den Rotorelementen als auch den Statorelementen angeordnet ist.

Der Vorteil der Erfindung besteht darin, daß durch die starre zweiteilige Rotorgestaltung die Auswirkungen des Axialspiels auf das Sensorsignal unterbunden werden, da die beiden zwischen Rotor und Stator auftretenden Luftspalte gleichzeitig in entgegengesetzte Richtung verändert werden und somit die Summe der Luftspalte immer konstant ist.

Vorteilhafterweise ist die Summe der beiden Luftspalte, die sich in axialer Richtung zwischen den Rotorelementen und je einem Statorelement ausbilden, klein gegenüber der axialen Ausdehnung des Magneten, wodurch der Magnetfluß durch den Stator unterstützt wird.

In einer Ausgestaltung sind die Statorelemente ebenfalls kreissegmentähnlich ausgebildet.

Der Außenradius des Kreissegmentes mindestens eines Rotorelementes entspricht annähernd dem Außenradius des kreissegmentähnlichen Statorelementes. Die Rotorelemente sind durch zwei Radien charakterisiert, wobei der erste Radius annähernd dem Außenradius eines Statorelementes und der zweite Radius annähernd dem Radius des Magneten entspricht.

Die Magnetfeldsonde ist dabei radial zur Drehachse der Welle des Sensors im Luftspalt zweier Statorelemente angeordnet.

In einer Weiterbildung ist der Außenradius des Kreissegmentes mindestens eines Rotorelementes kleiner als der Außenradius eines Statorelementes. Dies ermöglicht die Anordnung der Magnetfeldsonde axial zur Drehachse der Weile des Sensors im Luftspalt zwischen den beiden Statorelementen. Der Vorteil dieser Anordnung besteht darin, daß der Magnet nun optimal dimensioniert werden kann, da der axiale Abstand der beiden Rotorteile frei variiert werden kann.

Eine Montagevereinfachung des Gesamtsensors wird erreicht, wenn das Kreissegment des ersten Rotorelementes einen geringeren Winkel als die Segmentlücke zwischen zwei Statorsegmenten aufweist.

Durch die unsymmetrische Gestaltung der Rotorscheibe wird der Magnetfluß gezielt über die beiden Statorhälften geführt.

Da die Winkelabhängigkeit der Flußführung nicht über die Kontur oder Magnetisierung des Magneten erreicht wird, sondern durch die unsymmetrische Gestaltung des Rotors, sind die Anforderungen an den Magneten minimal.

Der Magnet muß lediglich ein axial gerichtetes Feld erzeugen. Dieses kann wahlweise von einem drehbar gelagerten Dauermagneten oder einem bezogen auf den Stator ortsfesten Magneten erzeugt werden, der in diesem Fall sowohl als Dauer- oder auch als Elektromagnet ausgeführt sein kann.

In einer Weiterbildung ist der Magnet als dauermagnetischer Ringmagnet ausgebildet.

Der Ringmagnet ist im Sensor besonders einfach zu montieren, wenn er ortsfest direkt mit den beiden Statorhälften verbunden ist.

In einer anderen Ausgestaltung ist der Magnet an einer durchgehenden Rotorwelle befestigt, in dem er auf diese aufgesteckt ist .

In einer weiteren Ausführung sind die beiden Rotorscheiben über eine unmagnetische Hülse starr gekoppelt, wobei je eine Rotorscheibe an einem Teil einer zweigeteilten Rotorwelle fest angeordnet ist.

Die Statorsegmente sind dabei immer koaxial um die Drehachse der Rotorwelle angeordnet.

Die Erfindung läßt zahlreiche Ausführungsbeispiele zu. Eines davon soll anhand der in der Zeichnung dargestellten Figuren näher erläutert werden.

Es zeigen:
- Fig. 1: Eine erste Ausführung des erfindungsgemäßen Winkelsensors mit einem Schnitt durch Gehäuse und Stator
- Fig. 2:: erste Ausführung des Rotors
- Fig. 3:: Rotor-Stator-Anordnung
- Fig. 4:: Eine zweite Ausführung des erfindungsgemäßen Winkelsensors
- Fig. 5:: Rotor-Stator-Anordnung senkrecht zur Drehachse
- Fig. 6:: zweite Ausführung der Rotor-Stator-Anordnung
- Fig. 7:: Signalverlauf über dem Drehwinkel
- Fig. 8:: eine dritte Ausführung der Rotor-Stator-Anordnung
- Fig. 9:: eine vierte Ausführung der Rotor-Stator-Anordnung
- Fig. 10:: Anordnung des Winkelsensors auf einem Trägerelement
- Fig. 11:: Prinzipieller Aufbau eines linearen magnetischen Positionssensor
- Fig. 12:: Schnitt durch einen linearen magnetischen Positionssensor

Gleiche Teile sind mit gleichem Bezugszeichen gekennzeichnet.

Das Grundprinzip soll zunächst an einer Rotorgestaltung mit zwei halbkreisfömigen Rotorsegmenten erläutert werden. Diese Anordnung ist günstig für Einsatzfälle, wo Drehwinkel von 90° erfaßt werden sollen, wie z. B. bei einer Drosselklappe in Brennkraftmaschinen.

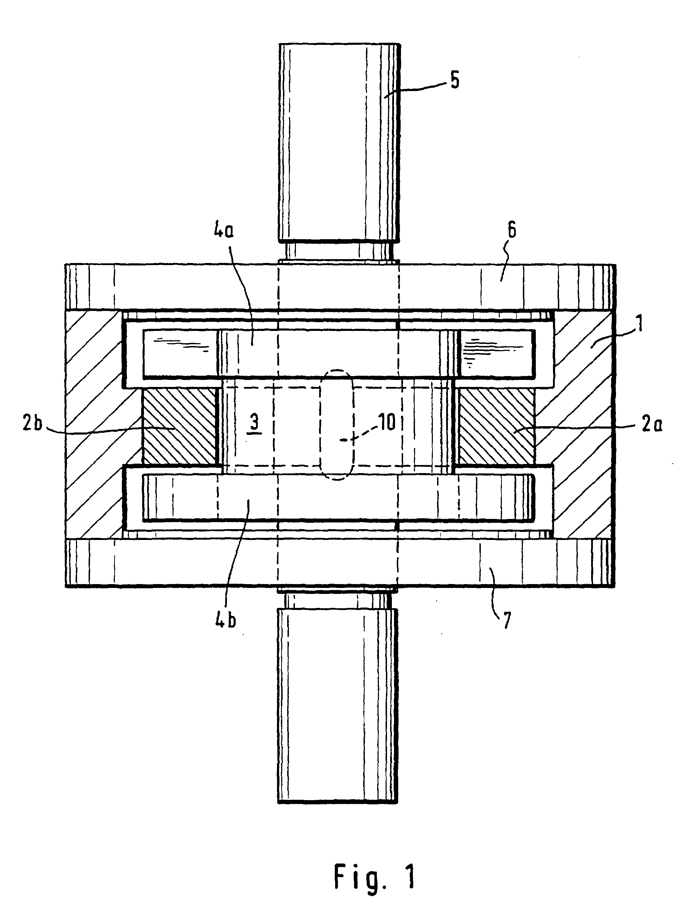

In Fig. 1 ist ein Winkelsensor dargestellt, bei welchem in einem unmagnetischen Messinggehäuse 1 stoffschlüssig ein zweigeteilter Weicheisenring als Stator mit den Statorteilen 2a, 2b angeordnet ist. Die vorzugsweise schalenförmigen Statorteile 2a, 2b, die zusammen betrachtet einen hohlzylinderförmigen Stator darstellen, sind koaxial um einen Dauermagneten 3 herum angeordnet. Dabei ist der Magnet 3 axial magnetisiert.

Der Magnet 3 befindet sich zwischen zwei Rotorscheiben 4a, 4b aus weichmagnetischem Material, die um 180° gegeneinander verdreht sind.

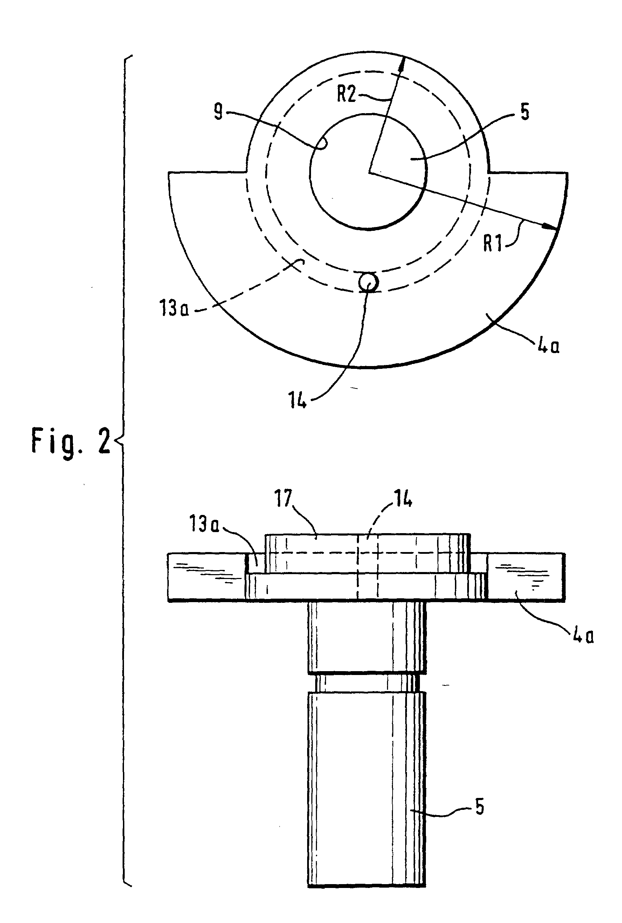

Jede Rotorhälfte 4a, 4b ist dabei über 180° der Scheibe durch einen ersten Außenradius und über die weiteren 180° der Scheibe durch einen zweiten Außenradius charakterisiert. Der größere Außenradius R1 entspricht in etwa dem Außenradius des Stators 2, der kleinere Radius R2 ist auf den Magnetdurchmesser abgestimmt (Fig. 2). Dabei ist R1 > R2, so daß jedes Rotorsegment im wesentlichen halbkreisförmig erscheint.

Die Rotorhälften 4a, 4b weisen je eine mittige Bohrung 9 auf, die die durchgehende Rotorwelle 5 aufnehmen. Die Rotorhälften 4a, 4b sind dabei auf der durchgehenden Rotorwelle 5 fest arretiert. Die Rotorwelle 5 besteht aus unmagnetischem Material.

Die Rotorhälften 4a, 4b können aber auch als Teil der Rotorwelie 5 ausgebildet sein.

Die Rotorwelle 5 besteht dabei aus dem gleichen magnetischen Material wie die Rotorsegmente 4a, 4b. Die mechanische Ankopplung der zu überwachenden Welle erfolgt dabei unmagnetisch.

Der Magnet 3 ist vorteilhafterweise ebenfalls hohlzylindrisch als Ringmagnet ausgebildet und auf der Rotorwelle 5 befestigt.

Das ebenfalls hohlzylinderförmige Gehäuse 1 ist an beiden Seiten mit Akdeckungen 6 und 7 verschlossen, in welchen die Rotorwelle 5 gelagert ist.

Eine Magnetfeld-Sonde 12, z. B. eine Hall-Sonde oder sonstige Magnetfeidsonden (induktive Systeme) wird durch die Öffnungen 10 im Gehäuse 1 in den dahinterliegenden Luftspalt 11 zwischen den beiden Statorhälften 2a, 2b eingeführt.

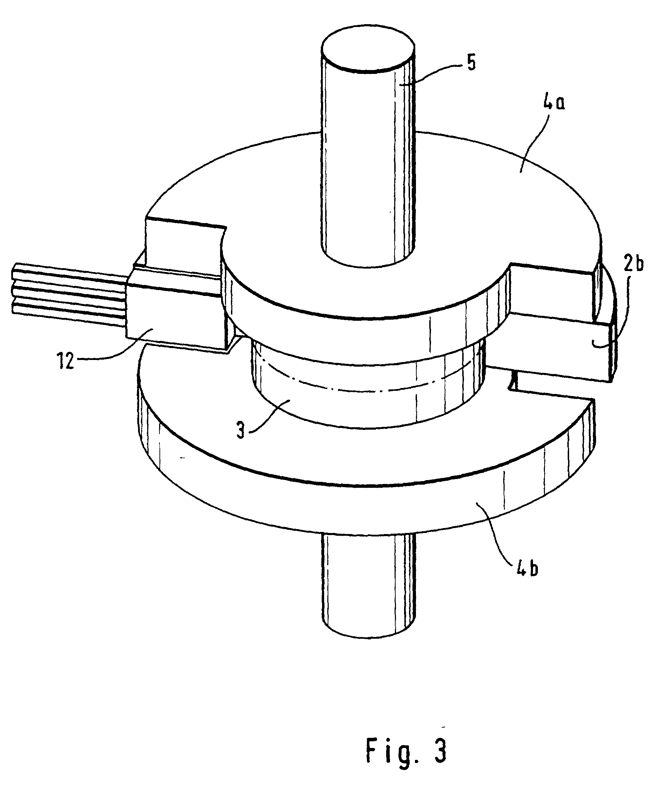

Dies ist noch einmal prinzipiell in Figur 3 dargestellt. Um den Hall-Sensor 12 sichtbar zu machen, wurde auf die Darstellung der zweiten Statorhälfte 2a verzichtet. Diese wäre dem Hallsensor 12 vorgelagert.

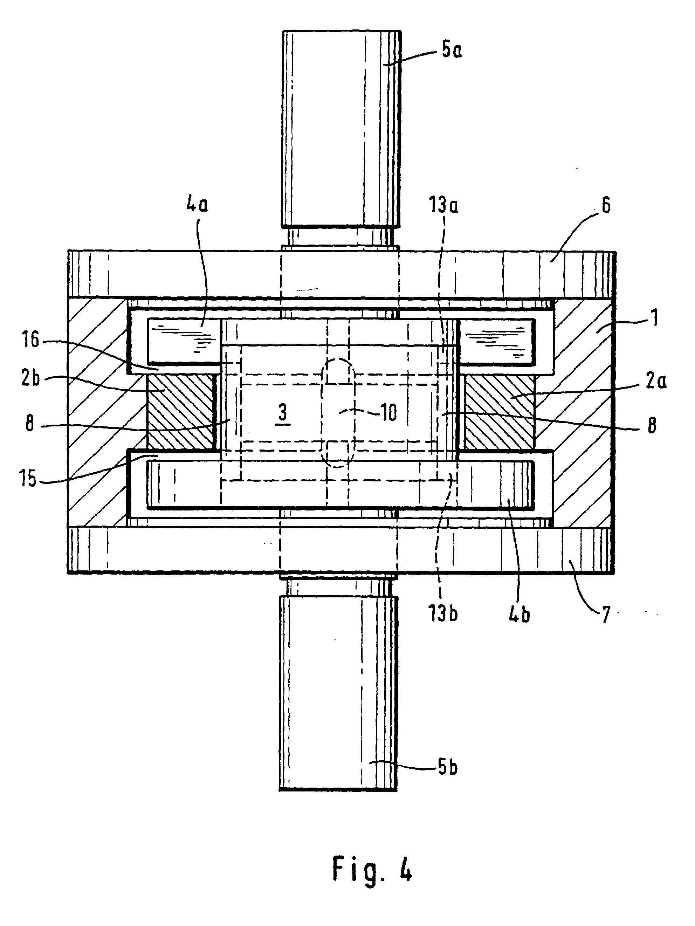

Gemäß Fig. 4 ist der Magnet 3 zylindrisch oder quaderförmig ausgebildet und in einer unmagnetischen Hülse 8 untergebracht. Der Magnet 3 kann in die Hülse 8 eingeklebt sein.

In vorliegendem Fall ist die Rotorwelle 5 zweiteilig ausgebildet. An jedem Teil der Rotorwelle 5a, 5b ist eine Rotorscheibe 4a, 4b befestigt. Die Hülse 8 greift in eine Ausfräsung 13 a, 13b der Rotorscheibe 4a, 4b ein und verbindet somit starr die beiden Teile der Rotorwelle 5a, 5b miteinander.

Die Hülse 8 ist zusätzlich durch einen Arretierstift 14 gesichert.

Zum Höhenausgleich zwischen Magnet 3 und Hall-Sonde 12 befindet sich auf den Rotorscheiben 4a, 4b ein erhöhter weichmagnetischer Bereich 17 (Fig. 2).

Zwischen den beiden Rotorhälften befindet sich der Stator 2a, 2b. Die beiden Statorhälften 2a, 2b sind gut magnetisch leitfähig. Ferner ist die Summe der beiden Luftspalte 15, 16, die sich in axialer Richtung zwischen Rotor und Stator ausbilden, klein gegenüber der Länge des Magneten 3. Hierdurch wird erreicht, daß der größere Anteil des magnetischen Flusses über die beiden Statorhälften fließt.

In einer speziellen Ausführungsform wird als magnetisches Material Samarium-Kobalt verwendet. Bei einer axialen Ausdehnung des Magneten 3 von 3 mm, betragen die Luftspalte 15, 16 zwischen Rotorscheiben 4a, 4b und den Statorhälften 2a, 2b annähernd 0,5 mm.

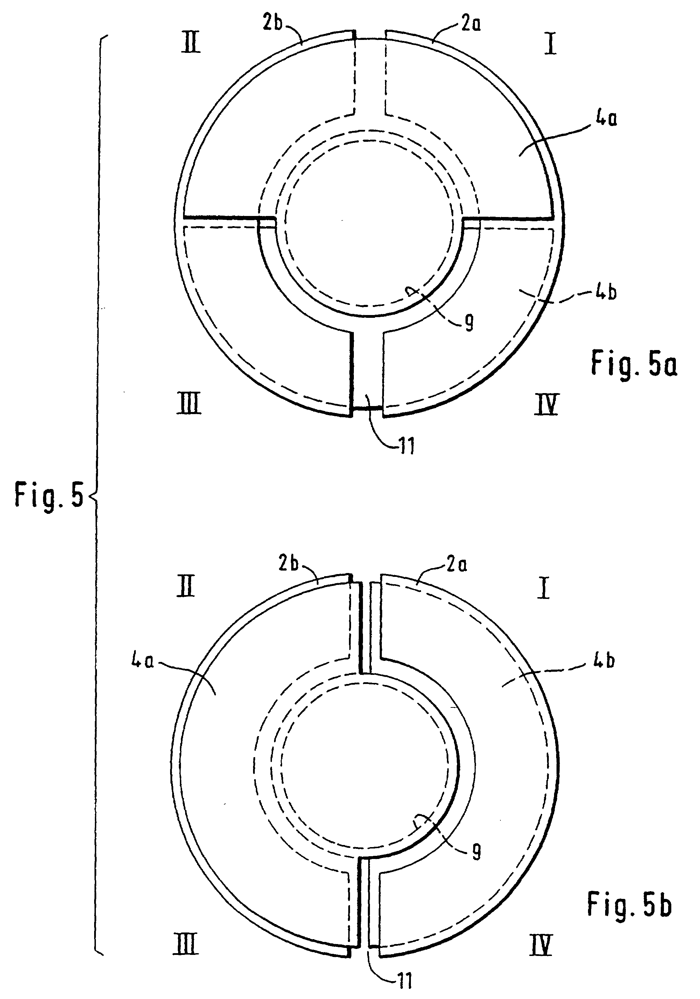

Mit Hilfe von Fig. 5 soll nun die Funktionsweise des beschriebenen Winkelsensors erläutert werden. Zum besseren Verständnis wurden über den Sensor 4 Quadranten gelegt.

Prinzipiell tritt der magnetische Fluß aus dem Nordpol des Magneten in die erste Statorhälfte ein. Ein kleinerer Teil schließt sich als Streufluß über den Luftraum zum Südpol des Magneten hin, und tritt dort in die zweite Rotorhälfte und anschließend in den Südpol ein.

Der Rotor ist zunächst wie in Fig. 5a dargestellt, ausgerichtet. Die Schnittlinie (Sehne" der halbkreisförmigen Scheiben 4a, 4b) steht senkrecht zum Meßluftspalt 11. In dieser Stellung wird jeweils etwa die Hälfte des magnetischen Nutzflußes im ersten Quadranten aus der oberen Rotor-Halbscheibe 4a austreten, über die rechte Statorhälfte 2a zum vierten Quadranten fließen und dort in die untere Rotorhalbscheibe 4b eintreten. Die andere Hälfte des Flusses wird im zweiten Quadranten aus der oberen Rotor-Halbscheibe 4a austreten, über die linke Statorhälfte 2b zum dritten Quadranten fließen und dort in die untere Rotor-Halbscheibe 4b eintreten.

Die Induktion im Meßluftspalt 11 wird zu Null. Da der Fluß den Luftspalt 11 nicht kreuzt, ergibt sich der minimale magnetische Widerstand des Gesamtkreises, und folglich der maximale magnetische Fluß. Der Rotor 4a, 4b wird sich also ohne äußere Krafteinwirkung bevorzugt in diese Position stellen.

Die gleichen Verhältnisse ergeben sich, wenn der Rotor um 180° weitergedreht wird.

Im nächsten Schritt sei der Rotor um 90° im mathematisch positiven Sinn weitergedreht, wie es in Fig. 5b dargestellt ist. Damit befindet sich die mit dem Nordpol verbundene Rotor-Halbscheibe 4a über der linken Statorhälfte 2b. Die mit dem Südpol verbundene Rotor-Halbscheibe 4b steht über der rechten Statorhälfte 2a.

Praktisch tritt der gesamte Fluß gleichmäßig über den 2. und 3. Quadranten verteilt aus der linken Halbscheibe 4a (Nordpol) in die linke Statorhälfte 2b über, kreuzt den Luftspalt 11 und tritt dann, im Bereich des 1. und 4. Quadranten in die rechte Rotorhalbscheibe 4b (Südpol) ein.

Die Induktion im Meßluftspalt 11 hat damit ein Maximum. Da der magnetische Fluß den Luftspalt kreuzt, ergibt sich der maximale magnetische Widerstand des Gesamtkreises und folglich der minimale magnetische Fluß. Es ergibt sich eine instabile kraftfreie Stellung. Links und rechts von dieser Stellung tritt das maximale Rückstellmoment auf.

Die gleichen Verhältnisse ergeben sich, wenn der Rotor um 180° weitergedreht wird. Dabei kehrt sich das Vorzeichen des Magnetflusses durch den Meßluftspalt 11 um.

Das Ausgangssignal ist periodisch mit 360° und damit in einem Bereich von bis zu 180° eindeutig. Ferner ist das Ausgangssignal im Bereich von 120° weitgehend linear. Bei Anwendungen, wo ein redundantes Signal benötigt wird, kann ein 2. Sensor im Luftspalt 11 zwischen den Statorelementen 2a, 2b plaziert werden.

Da die Statoraußenflächen aufgrund der hohen Permeabilität Äquipotentialflächen darstellen, ist die Induktion in den linearen Bereichen des Luftspaltes 11 überall gleich groß. Hierdurch ergibt sich eine sehr gute Konformität zwischen den beiden Kanälen, so daß z. B. die Fehlfunktion eines der beiden Kanäle sehr früh detektiert werden kann.

Bei dem beschriebenen Winkelsensor bleibt die Summe der Luftspalte, die axial zu beiden Seiten zwischen Rotor-Haibscheiben 4a, 4b und Statorhälften 2a, 2b bestehen, stets konstant.

Dadurch ergibt sich eine sehr gute Unterdrückung des Axialspieleinflusses auf das Meßsignal.

Sollen Verdrehwinkel von beispielsweise 30° oder kleiner detektiert werden, wie es beispielsweise an einem Gaspedal eines Kraftfahrzeuges notwendig ist, muß der Signalhub für kleine Meßbereiche erhöht werden.

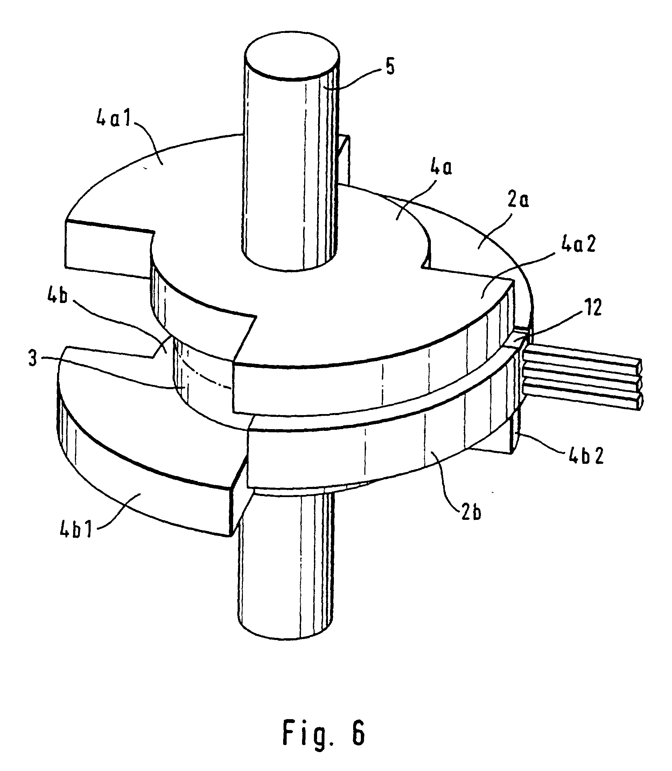

Dazu wird eine Rotoranordnung gewählt, wie sie in Figur 6 dargestellt ist. Die Rotorelemente 4a und 4b sind jetzt so ausgebildet, daß sie aus einer ganzzahligen Anzahl jeweils um die eigene Breite gegeneinander versetzter Segmente bestehen, die in Richtung des Drehzentrums magnetisch gekoppelt sind.

Auch diese Rotorelemente 4a, 4b werden starr miteinander gekoppelt.

Im einfachsten Fall weist jedes Rotorelement zwei Segmente auf, die sich gegenüberliegend angeordnet sind. Das erste Rotorelement 4a weist um 180° gegeneinander verschobene Segmente 4a1, 4a2 auf, das zweite Rotorelement 4b weist ebenfalls zwei Segmente 4b1, 4b2 auf. Die beiden Rotorelemente 4a, 4b sind so gegeneinander versetzt, daß dem Segment 4a1 des Rotorelementes 4a eine Segmentlücke des Rotorelementes 4b gegenüberliegt. Das gleiche gilt für die Segmente 4b1, 4b2 des zweiten Rotorelementes 4b, welchen immer eine Segmentlücke des ersten Rotor-elementes 4a gegenüberliegen. Als Segmentlücke wird dabei jeweils der Abstand zwischen zwei Segmenten 4a1, 4a2 bzw. 4b1, 4b2 eines Rotor-elementes 4a bzw. 4 b bezeichnet.

Es ist aber auch vorstellbar, daß die Rotorelemente 4a, 4b N Segmente aufweisen. Dann werden die Rotorelemente um 180°/N gegeneinander versetzt angeordnet. Wie bereits erläutert, beträgt die Breite jedes Flügels dabei entsprechend 180°/N. Dadurch wird die Periodizität des Signals gegenüber der halbkreisförmigen Variante um 1/N reduziert.

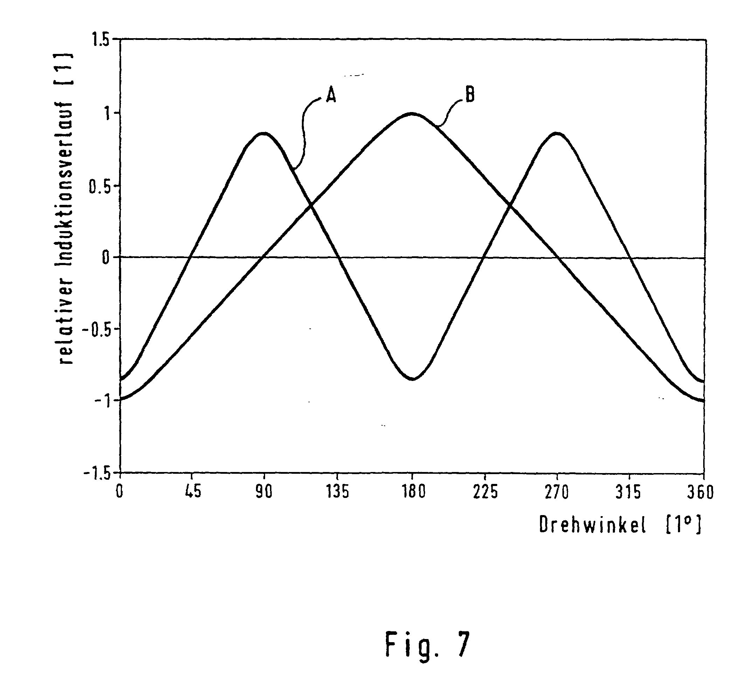

In Figur 7 ist der Signalverlauf in Abhängigkeit vom Drehwinkel dargestellt. Dabei zeigt die Kurve A den Flußverlauf in den Meßluftspalten für eine Rotoranordnung wie sie gemäß Bild 6 dargestellt ist. Bei zwei Segmenten wird eine Periode von 180° erreicht.

Der Signalverlauf für die halbkreisförmigen Rotoranordnungen ist durch die Linie B dargestellt. Bei dieser Einsegmentanordnung wird eine Periode von 360° erreicht.

Die wirksamen Flächen der Rotoranordnung 4a, 4b und der Statoranordnung 2a, 2b, über welchen der Fluß eingekoppelt wird, ist proportional 1 : 2 N. Die Anzahl der Luftspalte beträgt 2 N.

Das in Bild 6 dargestellte System weist eine Statoranordnung auf, welche aus zwei nebeneinander angeordneten 90° Segmenten 2a, 2b besteht, die zusammen einen Bereich von 180° bilden. Die Statorsegmente 2a, 2b sind zwischen den Rotorelementen 4a, 4b angeordnet und bilden gegeneinander einen Luftspalt, in welchem die Hallsonde 12 radial zur Welle 5 angeordnet ist.

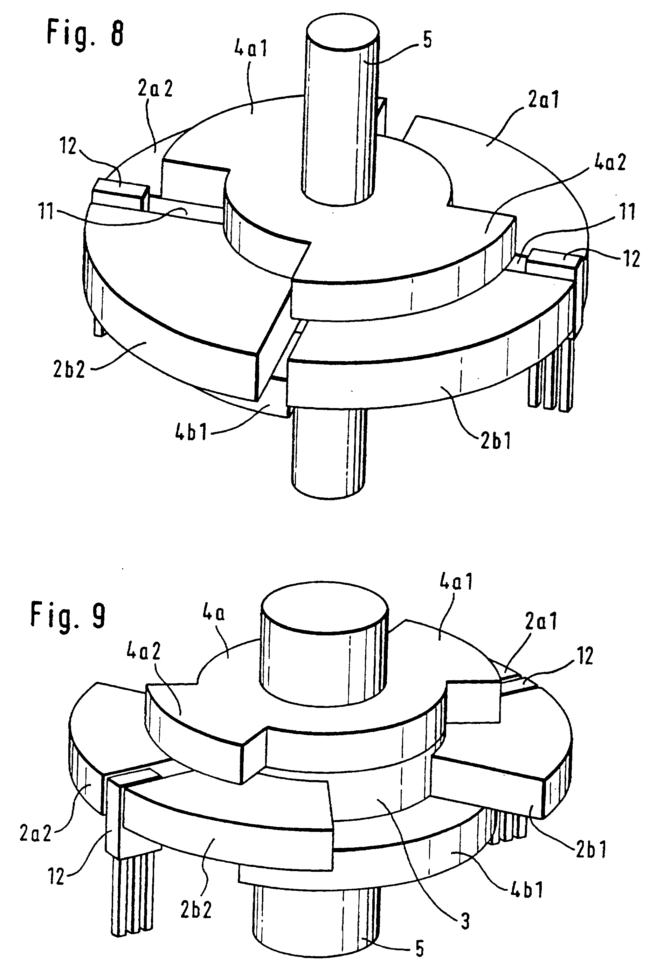

Ein redundantes System ist in Figur 8 dargestellt. Jeweils 2 als 90° Segmente ausgebildete Statorelemente 2a1, 2b1 bzw. 2b2, 2a2, bilden den Meßluftspalt 11, in welchen jeweils eine Magnetsonde 12 angeordnet ist. Bei dieser Ausführung sind die Statorsegmente 2a1, 2a2, 2b1, 2b2, mit einem größeren Außenradius versehen, als die Rotorsegmente 4a1, 4a2, 4b1 und 4b2. Die Magnetsonden 12 können in diesem Fall um 90° gedreht, d. h. axial zur Drehrichtung des Sensors im Meßluftspalt 11 angeordnet werden. Beide Magnetfeldsonden können aufgrund dieser Ausführung auf ein und derselben Leiterplatte angeordnet werden.

Der Magnet 3 kann nun optimal dimensioniert werden, da der axiale Abstand der beiden Rotorelemente 4a, 4b frei wählbar ist.

Bei den bisher betrachteten Anordnungen wird die Periodizität des Signals an den Meßbereich angepaßt.

Hierzu wurde eine ganzzahlige Teilung von Rotor und Stator durch N vorgenommen. Weicht man vom ganzzahligen Teilungen ab, so ergeben sich Bereiche mit Steigung 0 oder doppelte Steigung innerhalb einer vollen Umdrehung um 360°.

Für Anwendungen mit eingeschränktem Winkelbereich sind aber auch nichtganzzahlige Teilungen von Rotor und Stator denkbar.

In Bild 9 ist ein Beispiel dargestellt, bei dem eine Segmentierung in 57° vorgenommen wurde und ein redundantes Signal erzeugt wird.

Zu diesem Zweck sind vier Statorelemente 2a1, 2b1, 2a2, 2b2 vorgesehen, von denen jeweils zwei Statorsegmente 2a1, 2b1 bzw. 2a2, 2b2 annähernd parallel aneinandergrenzen. Zwischen diesen beiden Statorpaaren 2a1, 2b1; 2a2, 2b2 ergeben sich offene Bereiche von hier beispielsweise 66°.

Das Rotorelement 4a weist zwei Segmente 4a1, 4a2 von einfacher Statorbreite (57°) auf. Das Rotorelement 4b ist komplementär aufgebaut, d. h. die Lücken haben eine Ausdehnung, welche der Breite der Kreissegmente 4a1, 4a2 des Rotorelementes 4a entsprechen.

Bringt man das Rotorpaket 4a, 4b in eine geeignete Stellung, die ±90° zur dargestellten Stellung entspricht, so kann dieses als ganzes axial gefügt bzw. zerlegt werden.

Hierdurch läßt sich eine wesentliche Montagevereinfachung erreichen, da nun die Statorseite (Leiterplatte 17) mit Statoren und Elektronik ebenso wie die Rotorseite (Rotoreiemente 4a, 4b, Magnet 3 und Welle 5 ) als vormontierte Einheiten gehandhabt werden können.

Beispielsweise kann die Rotorseite auf einem unmagnetischen Körper, der z. B. aus Kunststoff besteht, vormontiert werden, welche dann auf die Welle 5 aufgepreßt wird. Durch den Kunststoffkörper läßt sich eine magnetische Entkopplung der Welle 5 herstellen, welche dann aus weichmagnetischem Werkstoff bestehen kann. Auch braucht die Welle dann nicht mehr abgesetzt sein, was ebenfalls eine Vereinfachung bedeutet.

In Bild 10 ist die Anordnung des Sensors auf der Leiterplatte dargestellt. Zur vereinfachten Darstellung sind hier die Rotorelemente mit halbkreisförmiger Ausgestaltung gemäß dem Ausführungsbeispiel in Figur 1 gewählt. Bild 10a zeigt die Draufsicht auf die Leiterplatte 17, während in Bild 10b die entsprechenden Schnittdarstellungen gezeigt sind.

Die Rotoreiemente 4a, 4b werden auf eine unmagnetische, zweifach abgesetzte Welle 5 aufgepreßt. Die Statorsegmente 2a, 2b werden über Bohrungen 20 mittels Hohlnieten 18 und Scheiben 19 auf der Leiterplatte 17 befestigt, auf welcher auch die sich im Meßluftspalt zwischen den Statorsegmenten 2a, 2b angeordneten Magnetfeldsensoren 12 und evtl. auch weitere Bauelemente zu Signalkonditionierung angeordnet sind (vgl. Schnitt B - B ).

Wie in der Draufsicht erkennbar, befinden sich die Bohrungen 20 in den Statoreiementen 2a, 2b außerhalb des äußeren Rotorradius R1. Eine zusätzliche Linearisierung der Sensorkennlinie kann über eine winkelabhängige Gestaltung der Radien erreicht werden.

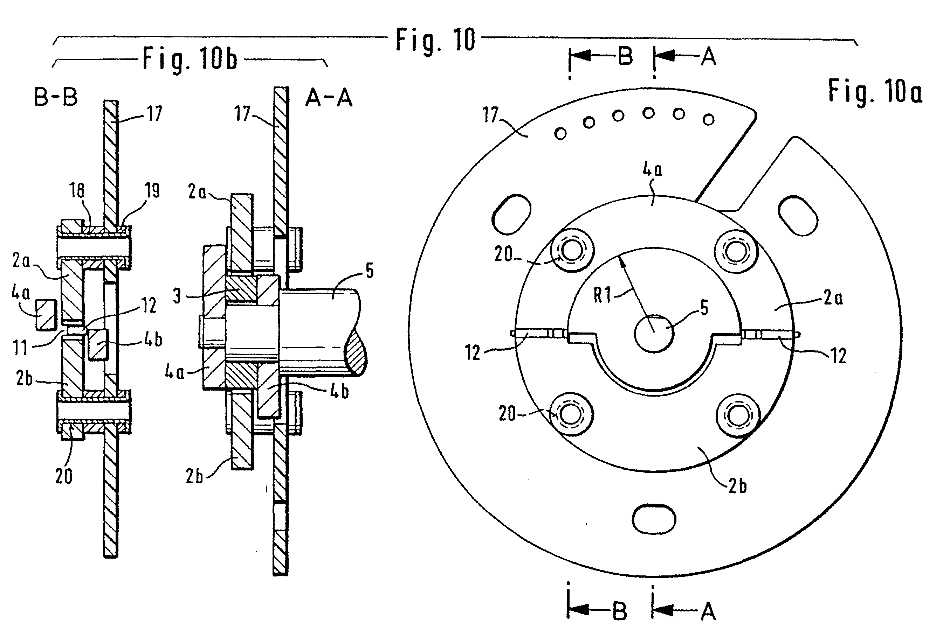

Wie aus Figur 10 ersichtlich, ist auch hier der Magnet 3 als Ringmagnet um die Welle 5 ausgeführt, der axial magnetisiert ist und direkt auf die Welle 5 zwischen den beiden Rotorscheiben 4a, 4b aufgesteckt ist.

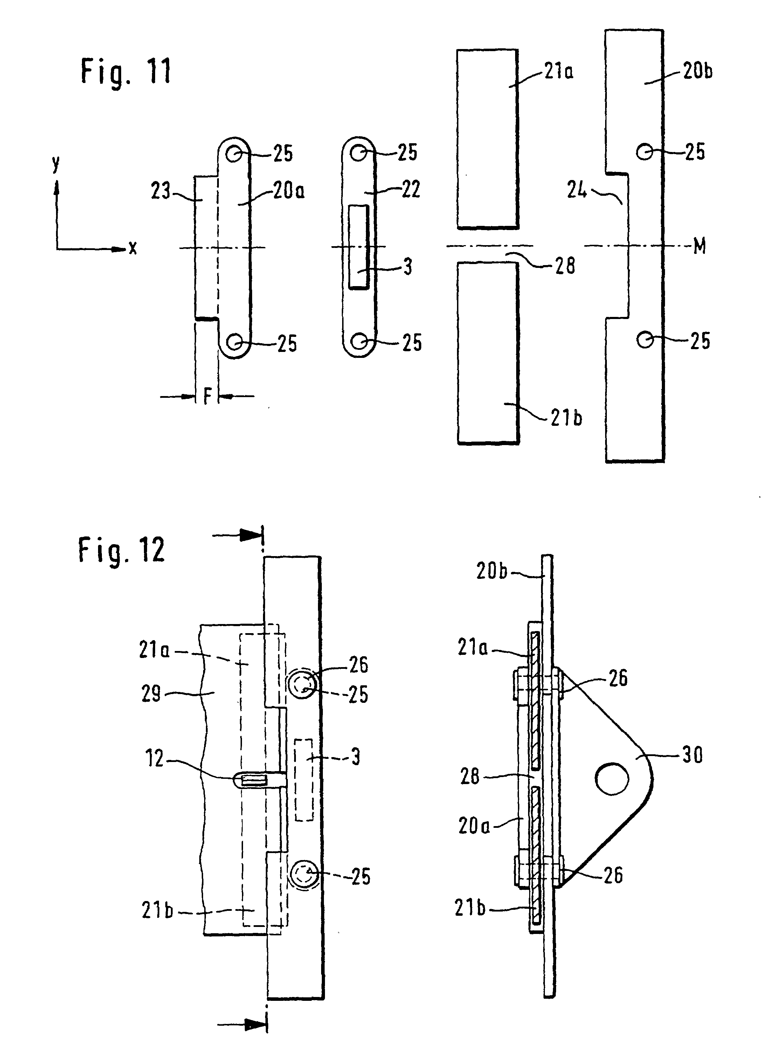

In Figur 11 ist der erfindungsgemäße Positionssensor als linearer Sensor dargestellt.

Dieser lineare Sensor weist zwei bewegliche, weichmagnetische Schiebeelemente 20a und 20b auf. Das Schiebeelement 20a besitzt ein rechteckförmiges Segment 23 , dessen magnetisch wirksame Fläche F so dimensioniert ist, das sie genau der ebenfalls rechteckförmigen Segmentiücke 24 der zweiten Schiebeelementes 20b angepaßt ist.

Auf dem ersten Schiebeelement 20a ist eine Magnetaufnahme 22 montiert. Diese Magnetaufnahme 22 trägt einen quaderförmigen Magnet 3 so, daß bei der Montage der Magnetaufnahme 22 mit dem ersten Schiebeelement 20a der Magnet 3 außerhalb der wirksamen Fläche F des ersten Elementes 20a angeordnet ist.

Wie in Figur 12 dargestellt, ist die Magnetaufnahme 22 mit dem Magnet 3 und den beiden Schiebeelementen 20a und 20b über eine Nietverbindung (Öffnungen 25 und Niet 26) verbunden und dient gleichzeitig als Abstandshalter zwischen den beiden Schiebeelementen 20a und 20b.

Die auf einer nicht weiter dargestellten Leiterplatte befestigten Statorelemente 21a und 21b werden in die vormontierte Einheit aus den Schiebeelementen 20a und 20b sowie der Magnetaufnahme 22 so eingeschoben, daß der Luftspalt 28 zwischen den beiden Statorelementen 21a und 21b von der aktiven Fläche F des ersten Schiebeelementes 20a teilweise überdeckt wird, wobei die Statorelemente 21a, 21b räumlich nahe dem zweiten Schiebeelement 20b angeordnet sind.

Steht das Segment 23 des ersten Schiebeelementes 20a symmetrisch zur Mittellinie M des Sensors, so ergibt sich kein Ausgleichsfluß über den Meßluftspalt 28 zwischen den Statorelementen 21a und 21b. Werden die Schiebelemente 20a, 20b in y-Richtung aus dieser Position ausgelenkt, so stellt sich ein Ausgleichsfluß über den Luftspalt 28 zwischen den Statorelementen 21a, 21b ein, welcher von der Magnetfeldsonde 12 registriert wird, die im Luftspalt 28 der beiden Statoreiemente 21a, 21b angeordnet ist.

Der lineare Meßbereich des Sensors entspricht knapp der aktiven Länge des Segmentes 23 des ersten Schiebeelementes 20a. Das bedeutet, daß der Sensor mindestens dreimal länger ist als der Meßbereich.

Der beschriebene lineare Sensor kann beispielsweise zur Erfassung der Stellung eines Fahrpedals in einem Kraftfahrzeug eingesetzt werden. Zu diesem Zweck ist der Sensor über eine Fahrpedalanbindung 29 mit diesem verbunden. Die Anbindung an die Rückstellfeder erfolgt über die Einrichtung 30, die mit Hilfe der Niete 26 einfach am Sensor, vorzugsweise an dem zweiten Schiebeelement 20b angeordnet ist.

## Patentansprüche

1. Magnetischer Positionssensor, bei weichem in einem Magnetfeld mindestens zwei Statorelemente angeordnet sind und im Luftspalt zwischen den Statorelementen sich eine Magnetfeld-Sonde befindet, wobei ein der Bewegung eines Objektes folgendes Mittel parallel zu der von den Statorelementen aufgespannten Ebene angeordnet ist, **dadurch gekennzeichnet, daß** das mit dem beweglichen Objekt verbundene Mittel aus zwei weichmagnetischen Elementen (4a, 4b; 20a, 20b) besteht, wobei jedes weichmagnetische Element (4a, 4b; 20a, 20b) mindestens ein Segment (4a1, 4a2; 23) und eines der beiden Elemente eine Segmentlücke aufweist und die weichmagnetischen Elemente (4a, 4b; 20a, 20b) starr gegeneinander verschoben miteinander verbunden sind, so daß die Segmentlücke (24) des einen Elementes dem Segment (4a1, 4a2; 23) des anderen Elementes (4a; 20a) (4b; 20b) gegenübersteht, wobei die Statoreiemente (2a, 2b; 21a, 21b) zwischen den weichmagnetischen Elementen (4a, 4b; 20a, 20b) angeordnet sind und ein das Magnetfeld senkrecht zu der von den Statorelementen (2a, 2b; 21a, 21b) aufgespannten Ebene erzeugender Magnet (3) zwischen den weichmagnetischen Elementen (4a, 4b; 20a, 20b) angeordnet ist.

2. Magnetischer Positionssensor nach Anspruch 1 **dadurch gekennzeichnet , daß** das mit dem beweglichen Objekt verbundene Mittel ein Rotor ist, der in axialer Richtung zu den Statorelementen (2a, 2b) angeordnet ist, wobei jedes weichmagnetische Rotorelement (4a, 4b) mindestens ein Kreissegment aufweist, und die Rotorelemente starr gegeneinander verdreht miteinander verbunden sind, so daß das Kreissegment des ersten Rotorelementes (4a) einer Segmentlücke des zweiten Rotorelementes (4b) gegenübersteht, wobei die Statorelemente (2a, 2b) zwischen den Rotorelementen (4a, 4b) angeordnet sind und ein das Magnetfeld in axialer Richtung erzeugender Magnet sowohl zwischen Rotorelementen (4a, 4b) als auch den Statorelementen (2a, 2b) angeordnet ist.

3. Magnetischer Positionssensor nach Anspruch 2, **dadurch gekennzeichnet, daß** die Summe der beiden Luftspalte (15, 16), die sich in axialer Richtung zwischen den Rotorelementen (4a, 4b) und je einem Statorelement (2a, 2b) ausbilden, klein gegenüber der axialen Ausdehnung des Magneten (3) ist.

4. Magnetischer Positionssensor nach Anspruch 2, **dadurch gekennzeichnet, daß** die Statorelemente (2a, 2b) kreissegmentähnlich ausgebildet sind.

5. Magnetischer Positionssensor nach Anspruch 2 und 4, **dadurch gekennzeichnet, daß** der Außenradius (R1) des Kreissegmentes (4a1, 4a2; 4b1, 4b2) mindestens eines Rotorelementes (4a, 4b) annähernd dem Außenradius des kreissegmentähnlichen Statorelementes (2a, 2b) entspricht.

6. Magnetischer Positionssensor nach Anspruch 5, **dadurch gekennzeichnet, daß** die Rotorelemente (4a, 4b) durch zwei Radien (R1, R2) charakterisiert sind, wobei der erste Radius (R1) annähernd dem Außenradius eines Statorelementes (2a, 2b) und der zweite Radius (R2) annähernd dem Radius des Magneten (3) entspricht.

7. Magnetischer Positionssensor nach Anspruch 6 **dadurch gekennzeichnet, daß** die Magnetfeldsonde (12) radial zur Drehachse (5) des Sensors im Luftspalt (11) zweier Statorelemente (2a, 2b) angeordnet ist.

8. Magnetischer Positionssensor nach Anspruch 2 und 4, **dadurch gekennzeichnet, daß** der Außenradius (R1) des Kreissegmentes (4a1, 4a2; 4b1, 4b2) mindestens eines Rotoreiementes (4a, 4b) kleiner ist als der Außenradius eines Statorelementes (2a, 2b).

9. Magnetischer Positionssensor nach Anspruch 8, **dadurch gekennzeichnet, daß** Magnetfeldsonde (12) axial zur Drehachse (5) des Sensors im Luftspalt (11) zweier Statorelemente (2a, 2b). angeordnet ist.

10. Magnetischer Positionssensor nach Anspruch 2, **dadurch gekennzeichnet, daß** das Kreissegment (4a1, 4a2) des ersten Rotorelementes (4a) einen geringeren Winkel als die Segmentlücke zwischen zwei Statorsegmenten (2a1, 2a2; 2b1, 2b2) aufweist.

11. Magnetischer Positionssensor nach Anspruch 1 oder 2, **dadurch gekennzeichnet, daß** der das axial gerichtete Feld erzeugende Magnet (3) ein ortsfester Elektromagnet ist.

12. Magnetischer Positionssensor nach Anspruch 1 oder 2, **dadurch gekennzeichnet, daß** der das axial gerichtete Feld erzeugende Magnet (3) aus der Kombination eines Dauer- und eines Elektromagneten besteht.

13. Magnetischer Positionssensor nach Anspruch 1 oder 2, **dadurch gekennzeichnet, daß** der Magnet (3) als dauermagnetischer Ringmagnet ausgebildet ist.

14. Magnetischer Positionssensor nach Anspruch 13, **dadurch gekennzeichnet, daß** der Ringmagnet (3) direkt mit den beiden Statorelementen (2a, 2b) verbunden ist.

15. Magnetischer Positionssensor nach Anspruch 13, **dadurch gekennzeichnet, daß** der Ringmagnet (3) an der Rotorwelle (5) befestigt ist.

16. Magnetischer Positionssensor nach Anspruch 2 oder 6, **dadurch gekennzeichnet, daß** die Rotorelemente (4a, 4b) über eine unmagnetische Hülse (8) starr gekoppelt sind, wobei je ein Rotorelement (4a, 4b) an einem Teil der zweigeteilten Rotorwelle (5) fest angeordnet ist.

17. Magnetischer Positionssensor nach einem der Ansprüche 4 bis 7, **dadurch gekennzeichnet, daß** die Statorelemente (2a, 2b) koaxial um die Drehachse der Rotorwelle (5) herum angeordnet sind.

18. Magnetischer Positionssensor nach einem der vorhergehenden Ansprüche, **dadurch gekennzeichnet, daß** zum Höhenausgleich zwischen Magnet (3) und der Magnetfeld-Sonde (12) erhabene weichmagnetische Bereiche (17) auf den Rotorelementen (4a, 4b) angeordnet sind.

## Claims

1. Magnetic position sensor in which at least two stator elements are arranged in a magnetic field and a magnetic field probe is located in the air gap between the stator elements, a means that follows the movement of an object being arranged parallel to the plane spanned by the stator elements, **characterized in that** the means connected to the movable object comprises two soft-magnetic elements (4a, 4b; 20a, 20b), each soft-magnetic element (4a, 4b; 20a, 20b) having at least one segment (4a1, 4a2; 23) and one of the two elements having a segment gap and the soft-magnetic elements (4a, 4b, 20a, 20b) being connected to one another rigidly in a manner displaced relative to one another, with the result that the segment (4a1, 4a2; 23) of the other element (4a; 20a) the segment gap (24) in the one element (4b; 20b) is located opposite, the stator elements (2a, 2b; 21a, 21b) being arranged between the soft-magnetic elements (4a, 4b; 20a, 20b) and a magnet (3) that generates the magnetic field perpendicular to the plane spanned by the stator elements (2a, 2b; 21a, 21b) being arranged between the soft-magnetic elements (4a, 4b; 20a, 20b).

2. Magnetic position sensor according to Claim 1, **characterized in that** the means connected to the movable object is a rotor which is arranged in the axial direction with respect to the stator elements (2a, 2b), each soft-magnetic rotor element (4a, 4b) having at least one circle segment, and the rotor elements being connected to one another rigidly in a manner rotated relative to one another, with the result that the circle segment of the first rotor element (4a) is located opposite a segment gap in the second rotor element (4b), the stator elements (2a, 2b) being arranged between the rotor elements (4a, 4b) and a magnet that generates the magnetic field in the axial direction being arranged both between rotor elements (4a, 4b) and the stator elements (2a, 2b).

3. Magnetic position sensor according to Claim 2, **characterized in that** the sum of the two air gaps (15, 16) which are formed in the axial direction between the rotor elements (4a, 4b) and a respective stator element (2a, 2b) is small compared with the axial extent of the magnet (3).

4. Magnetic position sensor according to Claim 2, **characterized in that** the stator elements (2a, 2b) are of circle segment-like design.

5. Magnetic position sensor according to Claims 2 and 4, **characterized in that** the outer radius (R1) of the circle segment (4a1, 4a2; 4b1, 4b2) of at least one rotor element (4a, 4b) approximately corresponds to the outer radius of the circle segment-like stator element (2a, 2b).

6. Magnetic position sensor according to Claim 5, **characterized in that** the rotor elements (4a, 4b) are **characterized by** two radii (R1, R2), the first radius (R1) approximately corresponding to the outer radius of a stator element (2a, 2b) and the second radius (R2) approximately corresponding to the radius of the magnet (3).

7. Magnetic position sensor according to Claim 6, **characterized in that** the magnetic field probe (12) is arranged radially with respect to the rotary spindle (5) of the sensor in the air gap (11) between two stator elements (2a, 2b).

8. Magnetic position sensor according to Claims 2 and 4, **characterized in that** the outer radius (R1) of the circle segment (4a1, 4a2; 4b1, 4b2) of at least one rotor element (4a, 4b) is less than the outer radius of a stator element (2a, 2b).

9. Magnetic position sensor according to Claim 8, **characterized in that** the magnetic field probe (12) is arranged axially with respect to the rotary spindle (5) of the sensor in the air gap (11) between two stator elements (2a, 2b).

10. Magnetic position sensor according to Claim 2, **characterized in that** the circle segment (4a1, 4a2) of the first rotor element (4a) has a smaller angle than the segment gap between two stator segments (2a1, 2a2; 2b1, 2b2).

11. Magnetic position sensor according to Claim 1 or 2, **characterized in that** the magnet (3) that generates the axially directed field is a positionally fixed electromagnet.

12. Magnetic position sensor according to Claim 1 or 2, **characterized in that** the magnet (3) that generates the axially directed field consists of the combination of a permanent magnet and an electromagnet.

13. Magnetic position sensor according toclaim 1 or 2, **characterized in that** the magnet (3) is designed as a permanently magnetic ring magnet.

14. Magnetic position sensor according to Claim 13, **characterized in that** the ring magnet (3) is directly connected to the two stator elements (2a, 2b).

15. Magnetic position sensor according to Claim 13, **characterized in that** the ring magnet (3) is fastened on the rotor shaft (5).

16. Magnetic position sensor according to Claim 2 or 6, **characterized in that** the rotor elements (4a, 4b) are rigidly coupled by means of a nonmagnetic sleeve (8), a respective rotor element (4a, 4b) being fixedly arranged on a part of the rotor shaft (5), which is divided into two.

17. Magnetic position sensor according to one of Claims 4 to 7, **characterized in that** the stator elements (2a, 2b) are arranged coaxially around the axis of rotation of the rotor shaft (5).

18. Magnetic position sensor according toone of the preceding claims, **characterized in that** for the purpose of height equalization between magnet (3) and the magnetic field probe (12), elevated soft-magnetic regions (17) are arranged on the rotor elements (4a, 4b).

## Revendications

1. Capteur de position magnétique, dans lequel, dans un champ magnétique, sont disposés au moins deux éléments formant stator et, une sonde à champ magnétique se trouve dans l'entrefer, entre les éléments formant stator, un moyen, suivant le déplacement d'un objet, étant disposé parallèlement au plan défini par les éléments formant stator, **caractérisé en ce que** le moyen relié à l'objet mobile est formé de deux éléments (4a, 4b; 20a, 20b) en un matériau magnétique doux, chaque élément (4a, 4b; 20a, 20b) en un matériau magnétique doux présentant au moins un segment (4a1, 4a2; 23) et l'un des deux éléments présentant un créneau de segment et les éléments (4a, 4b; 20a, 20b) en un matériau magnétique doux étant reliés rigidement ensemble, en étant décalés angulairement l'un par rapport à l'autre, de sorte que le créneau de segment (24) d'un élément (4b; 20b) soit placée en regard du segment (4a1, 4a2; 23) de l'autre élément (4a; 20a), les éléments formant stator (2a, 2b; 21a, 21b) étant disposés entre les éléments (4a, 4b; 20a, 20b) en un matériau magnétique doux et un aimant (3) générant le champ magnétique, perpendiculairement au plan défini par les éléments formant stator (2a, 2b; 21a, 21b), est disposé entre les éléments (4a, 4b; 20a, 20b) en un matériau magnétique doux.

2. Capteur de position magnétique selon la revendication 1, **caractérisé en ce que** le moyen lié à l'objet mobile est un rotor disposé en direction axiale par rapport aux éléments formant stator (2a, 2b), chaque élément formant rotor (4a, 4b) en un matériau magnétique doux présentant au moins un segment de cercle et les éléments formant rotor étant reliés ensemble rigidement, en étant décalés angulairement l'un par rapport à l'autre, de sorte que le segment de cercle du premier élément formant rotor (4a) soit placé en regard d'un créneau de segment du deuxième élément formant rotor (4b), les éléments formant stator (2a, 2b) étant disposés entre les éléments formant rotor (4a, 4b) et un aimant, générant le champ magnétique en direction axiale, étant disposé, tant entre les éléments formant rotor (4a, 4b), qu'entre les éléments formant stator (2a, 2b).

3. Capteur de position magnétique selon la revendication 2, **caractérisé en ce que** la somme des deux entrefers (15, 16), présents en direction axiale entre les éléments formant rotor (4a, 4b) et un élément formant stator (2a, 2b) respectif, est petite par rapport à l'étendue en direction axiale de l'aimant (3).

4. Capteur de position magnétique selon la revendication 2, **caractérisé en ce que** les éléments formant stator (2a, 2b) sont configurés de façon analogue à un segment de cercle.

5. Capteur de position magnétique selon les revendications 2 et 4, **caractérisé en ce que** le rayon extérieur (R1) du segment de cercle (4a1, 4a2; 4b1, 4b2) d'au moins un élément formant rotor (4a, 4b) correspond à peu près au rayon extérieur de l'élément formant stator (2a, 2b) analogue à un segment de cercle.

6. Capteur de position magnétique selon la revendication 5, **caractérisé en ce que** les éléments formant rotor (4a, 4b) présentent deux rayons (R1, R2), le premier rayon (R1) correspondant à peu près au rayon extérieur d'un élément formant stator (2a, 2b) et le deuxième rayon (R2) correspondant à peu près au rayon de l'aimant (3).

7. Capteur de position magnétique selon la revendication 6, **caractérisé en ce que** la sonde de champ magnétique (12) est disposée radialement par rapport à l'axe de rotation (5) du capteur dans l'entrefer (11) de deux éléments formant stator (2a, 2b).

8. Capteur de position magnétique selon les revendications 2 et 4, **caractérisé en ce que** le rayon extérieur (R1) du segment de cercle (4a1, 4a2; 4b1, 4b2) d'au moins un élément formant rotor (4a, 4b) est inférieur au rayon extérieur d'un élément formant stator (2a, 2b).

9. Capteur de position magnétique selon la revendication 8, **caractérisé en ce que** la sonde de champ magnétique (12) est disposée axialement par rapport à l'axe de rotation (15) du capteur dans l'entrefer (11) de deux éléments formant stator (2a, 2b).

10. Capteur de position magnétique selon la revendication 2, **caractérisé en ce que** le segment de cercle (4a1, 4a2) du premier élément formant rotor (4a) présente un angle inférieur au créneau de segment ménagée entre deux segments formant stator (2a1, 2a2; 2b1, 2b2).

11. Capteur de position magnétique selon la revendication 1 ou 2, **caractérisé en ce que** l'aimant (3) générant le champ orienté axialement est un électroaimant fixe.

12. Capteur de position magnétique selon la revendication 1 ou 2, **caractérisé en ce que** l'aimant (3) générant le champ orienté axialement est formé de la combinaison entre un aimant permanent et un électroaimant.

13. Capteur de position magnétique selon la revendication 1 ou 2, **caractérisé en ce que** l'aimant (3) est réalisé sous la forme d'aimant annulaire à magnétisme permanent.

14. Capteur de position magnétique selon la revendication 13, **caractérisé en ce que** l'aimant annulaire (3) est relié directement aux deux éléments formant stator (2a, 2b).

15. Capteur de position magnétique selon la revendication 13, **caractérisé en ce que** l'aimant annulaire (3) est fixé à l'arbre de rotor (5).

16. Capteur de position magnétique selon la revendication 2 ou 6, **caractérisé en ce que** les éléments formant rotor (4a, 4b) sont couplés rigidement par l'intermédiaire d'une douille (8) amagnétique, un élément formant rotor (4a, 4b) étant respectivement disposé rigidement sur une partie de l'arbre de rotor (5) réalisé en deux parties.

17. Capteur de position magnétique selon l'une des revendications 4 à 7, **caractérisé en ce que** les éléments formant stator (2a, 2b) sont disposés coaxialement autour de l'axe de rotation de l'arbre de rotor (5).

18. Capteur de position magnétique selon l'une des revendications précédentes, **caractérisé en ce que** des zones (17) en un matériau magnétique doux et en relief, sont disposées sur les éléments formant rotor (4a, 4b) pour assurer une compensation en hauteur entre l'aimant (3) et la sonde à champ magnétique (12).
